# EUROPEAN PATENT APPLICATION

(11) **EP 4 230 358 A1**
(43) Date of publication of application: **23.08.2023**
(21) Application number: 22157220.9
(22) Date of filing: 17.02.2022
(51) Int. Cl.: B25J 9/16

(54) **TOOL CENTER POINT CALIBRATION DEVICE AND METHOD**

(71) Applicant: Captron Electronic GmbH, 82140 Olching (DE)
(72) Inventor: AUBAUER, Roland, 82245 Wessling (DE)
(74) Representative: Lohr, Jöstingmeier & Partner

(57) **Abstract**

A tool center point calibration device includes a laser light source and a semitransparent mirror configured to split a light beam of the laser light source into the first light beam and the second light beam. The second light beam is under a 90° angle to the first light beam. A first light detector at the first light beam generates a first signal when the first light beam is interrupted, and a second light detector at the second light beam generates a second signal when the second light beam is interrupted.

## Description

### Field of the invention

The invention relates to calibration devices for machine tools, also called tool center point calibration tools and to methods for calibrating machine tools with a calibration device.

### Description of the related art

A tool center point calibration method is disclosed in US 7,684,898 B2. The method uses a calibration device which has two light barriers which are angled to one another and cross in a crossing point. A tool is moved such that it crosses successively both light barriers. From the crossing positions, the true position of the tool can be calculated. The method requires comparatively complex calculations and coordinate system transformations. Further, it requires a device which has two light sources. These light sources must be precisely adjusted in their angle relative to each other.

### Summary of the invention

The problem to be solved by the invention is providing a tool center point calibration method, which can be easily performed with comparatively simple arithmetic operations. A further aspect is providing a tool center point calibration device which has a simplified structure, and which requires a simplified manufacturing and adjustment process.

Solutions of a problem are described in the independent claims. The dependent claims relate to further improvements of the invention.

In an embodiment, a tool center point calibration device has a first light beam and a second light beam under an angle to the first light beam. Further, a first light detector is at the first light beam and a second light detector is at the second light beam. The first light detector is configured to generate a first signal when the first light beam is interrupted, and the second light detector is configured to generate a second signal when the second light beam is interrupted.

The first light beam and the second light beam are under an angle such that at least an axis of the first light beam intersects an axis of the second light beam at a reference intersection point. Further, the first light beam may intersect the second light beam at the same point. The angle between the first light beam and the second light beam may be 90°. The angle may also be in a range of 90° ± 10°.

The light beams may be laser beams and further may be collimated laser beams. They may have any suitable wavelength, such that the light beams may be visible, e.g. red, blue or green or they may be infrared.

The tool center point calibration device may include a body which may have a U-shape. The open end of the U-shape allows moving a tool into the interior of the calibration device.

The at least one light source, the first light detector, and the second light detector may be held by at least one protrusion above the body of the tool center point calibration device. The at least one protrusion may have a tower shape. There may be a separate protrusion for each of the light source, the first light detector, and the second light detector.

Basically, there are two different concepts. In the first concept, which is know from prior art, the light beams intersect within the inner space of the U-shaped body such that the reference intersection point is accessible by a tool. Another concept which disclosed herein in detail, has no accessible reference intersection point within the inner space of the U-shaped body. Instead, only the axes of the light beams are crossing.

The first light beam may be generated by a first light source and the second light beam may be generated by a second light source. In an embodiment, only one light source is included. It may be coupled to a semi-transparent mirror to provide the first light beam and the second light beam. The first light beam may go straight through the mirror, whereas the second light beam is deflected by the mirror or vice versa.

In an embodiment, a method using a tool center point calibration device includes the steps of:
Providing a first light beam and a second light beam, the second light beam being under an angle to the first light beam, where the axes of the first light beam and of the second light beam have a reference intersection point. Further providing a first light detector and the first light beam which is configured to generate a first signal, when the first light beam is interrupted. And further providing a second light detector at the second light beam which is configured to generate a second signal when the second light beam is interrupted.

Starting with a movement of a tool along a straight first path section. The first path section may be selected such that it crosses the first light beam and the second light beam.

Receiving a first signal from the first light detector when the tool crosses the first light beam at first crossing point. The coordinates of the first crossing point are stored for later use. They may be stored in a memory of a controller.

Receiving a second signal when the tool crosses second light beam at a second crossing point. The coordinates of the second crossing point are stored for later use.

Changing direction of movement of the tool such, that movement is performed along a straight second path section. The second path section starts on or crosses at least the second light beam and further crosses again the first light beam. Depending on a specific configuration, there are different options for the second path section. There may be an angle between the second path section and the first path section of appropriate 90° to either side. The angle may be in a range between 60 and 120°. The selection of the angle is not critical as long as the second path section crosses or starts on the second light beam and further touches the first light beam.

The angle between the second path section and the first path section may also be approximately 180°, but excluding 180°. It may be in a range of 150 to 179° in any direction.

Whereas a 90° angle is a sideward movement, the larger angle close to 180° is a backward movement which may move the tool out of the U-shaped body. The advantage of a sidewards movement is a higher accuracy compared to the backward movement.

Receiving a first signal from the first light detector when the tool crosses the first light beam at a third crossing point. The coordinates of the third crossing point are stored for later use.

Calculating the coordinates of a virtual intersection point. The calculation is based on the coordinates of the first crossing point, the second crossing point, and the third crossing point. If there were two completely independent path sections which did not have the second crossing point in common, all crossing points of the path sections with the first and the second light beams are used. Step g) may include the following sub-steps:
g1) Determining a first circle which has a center point in the center between the first crossing point and the second crossing point. This center is halfway on the first path section between the first crossing point and the second crossing point. The circle further has a diameter which corresponds to the distance between the first crossing point and the second crossing point, such that the circle centered between the crossing points goes through both crossing points.
g2) Determining a second circle which has a center point in the center between the second crossing point and the third crossing point. This center is halfway on the second path section between the second crossing point and the third crossing point. The circle further has a diameter which corresponds to the distance between the second crossing point and the third crossing point, such that the circle centered between the crossing points goes through both crossing points.
g3) Based on the first circle and the second circle, the coordinates of a virtual intersection point between the first circle and the second circle are calculated. In most cases, there are two intersection points of the circles. One of the intersection points is on the second light beam and it may be at the position of the second crossing point. What is needed is the other intersection point between the circles. This intersection point - herein referred to as the intersection point of the circles - which is distant from a second crossing point defines a virtual intersection point of a virtual position of the tool.

In a further step h), the displacement of the tool may be calculated by subtracting the coordinates of the virtual intersection point from the coordinates of the reference intersection point of the axes of the light beams.

The reference intersection point of the light beams or of the axes of the light beams may be calibrated by means of coordinate reference markers, which may be in a defined spatial relationship with the reference intersection point and which may be at defined positions of the tool center point calibration device.

An alternate embodiment to step a) may be providing one of a tool center point calibration device as disclosed herein.

The calculations disclosed herein is extremely flexible, as they may be made in any coordination system. They may be made in a world coordination system, in a coordination system relative to the tool center point calibration device or in a coordination system of the tool. Further, the calculations are comparatively simple and need not much processing power. Specifically, if the axes of the light beams cross under an angle of 90°, the Pythagorean theorem may be applied to find the crossing point of the circles. The method can be performed quick, as the movement path of the tool is short and simply a straight line. This also does not require complex programming of the tool handling system, e.g., the robot.

The coordinates of crossing points are known from an industrial robot or a machine tool which holds the tool and positions the tool. Further, the position of the tool center point calibration device may be calibrated with respect to the position of the tool handling device. The calculations and storing of coordinates may be done by a controller which may communicate with the tool handling system. The controller may receive coordinates from the tool handling system and/or configure the tool handling system to perform the required paths of movement along the first, second and optional third path sections. The controller may further be connected to the tool center point calibration device to receive signals from the first light detector and the second light detector. To determine a specific position of a crossing point, the controller may at the time, when it receives a signal from a light detector to request information about the actual position of a tool head holding the tool from the tool handling device. Alternatively, the controller may calculate the position based on other information, e.g., the travel time of the tool head or the tool handling device.

The axes of the first light beam and of the second light beam have an intersection point, which is referred herein as reference intersection point. Further, the light beams themselves may have an intersection at the same point. This intersection point may be inside the U-shaped body. The invention also works, if the intersection point of the axes of the light beams is outside of the U-shaped body.

### Description of Drawings

In the following the invention will be described by way of example, without limitation of the general inventive concept, on examples of embodiment with reference to the drawings.
Fig. 1 shows a tool center calibration device.
Fig. 2 shows the same embodiment from a different view.
Fig. 3 shows the same embodiment in a top view.
Fig. 4 shows a sectional view of the embodiment.
Fig. 5 shows a sectional view with two light sources.
Fig. 6 shows an embodiment with towers in a top view.
Fig. 7 shows an embodiment with towers in a side view.
Fig. 8 shows the movement of a tool tip.
Fig. 9 shows an example with an offset tool tip.
Fig. 10 shows a second embodiment.
Fig. 11 shows a movement of a tool tip in a second embodiment.
Fig. 12 shows an alternate movement of a tool tip.
Fig. 13 shows a flow-chart of a method of calibrating a tool tip.
Fig. 14 shows a tool handling system.

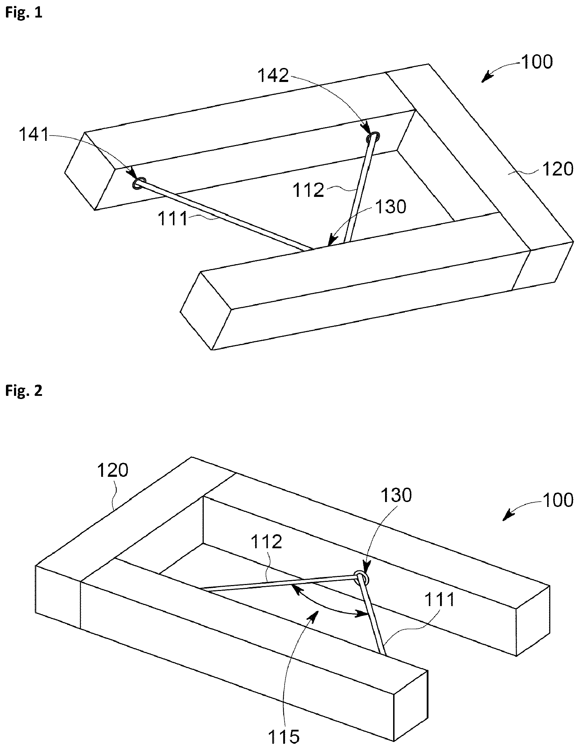

In Fig. 1, a first embodiment of a tool center calibration device 100 is shown. The tool has means to provide at least two light beams under an angle. There may be a first light beam 111 and a second light beam 112. Both light beams are under an angle, which may be a 90° angle. The tool may include a body 120 which may have a U-shape. For generating the light beams, at least one light source 130 may be provided. Further, at least one light detector may be provided for detecting the light beams. Basically, the body may have any other shape as long as it is suitable for holding the at least one light source and the light detectors.

Fig. 2 shows the same embodiment from a different view. In this view, the first light beam 111 and the second light beam 112 are shown originating from light source 130 with an angle 115 between the light beams. The angle may be 90°.

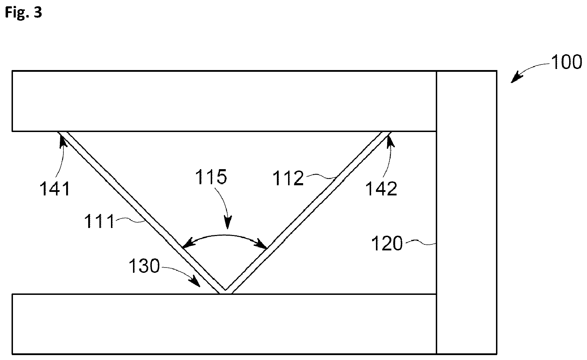

Fig. 3 shows the same embodiment in a top view. In this figure, the light beams 111 and 112 have an angle 115 which may be 90°. The embodiment would also work with other angles as long as the angle is known. For example, angles in a range between 60 and 120° would work. Errors are smaller, if the angle is closer to 90°, e.g., in a range between 85 and 95°. Further three coordinate reference markers 151, 152, 153 are shown. Such coordinate reference markers may be in a defined spatial relationship with the light beams. They may be used to calibrate the position in 3D space of the tool center calibration device 100 with respect to a robot, e.g., a robot coordinate system.

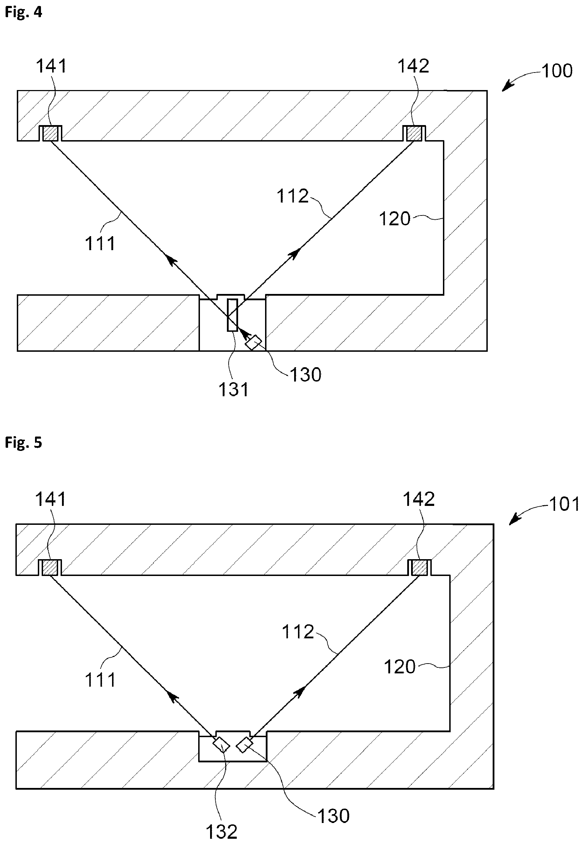

Fig. 4 shows a sectional view of the embodiment. The body 120 may hold a light source 130, which may be a laser diode, and a semi-transparent mirror 131 which may generate two light beams 111 and 112. The second light beam 112 may be reflected by the mirror whereas the first light beam 111 may go straight through the mirror. In another embodiment, two light sources may be used instead. The advantage of the embodiment shown herein is that only one light source has to be adjusted.

The body 120 further may hold a first light detector 141 for detecting the first light beam 111 and a second light detector 142 for detecting the second light beam 112. The first and second light detectors may be photodiodes or any other means for detecting the presence of a light beam. If the light beam is interrupted by a tool or a tool tip, this may be detected by the light detectors. Then a detection signal may be generated. This signal may be forwarded to a controller or a tool positioning device.

Fig. 5 shows a sectional view of a tool center point calibration device 101 with two light sources. It is basically, the same as the device 100 shown before. There are a light source 130 and a second light source 132 for generating the first light beam 111 and the second light beam 112 instead of a single light source 130 and a mirror 131. Here, the direction of light beams may be exchanged. For example, second light source 312 may be at the location of second light detector 142 and vice versa. Also, light source 130 and first light detector 141 may be exchanged. Dependent on the location of the light beams, there may be one or two openings in the body 120 through which the light beams pass the body.

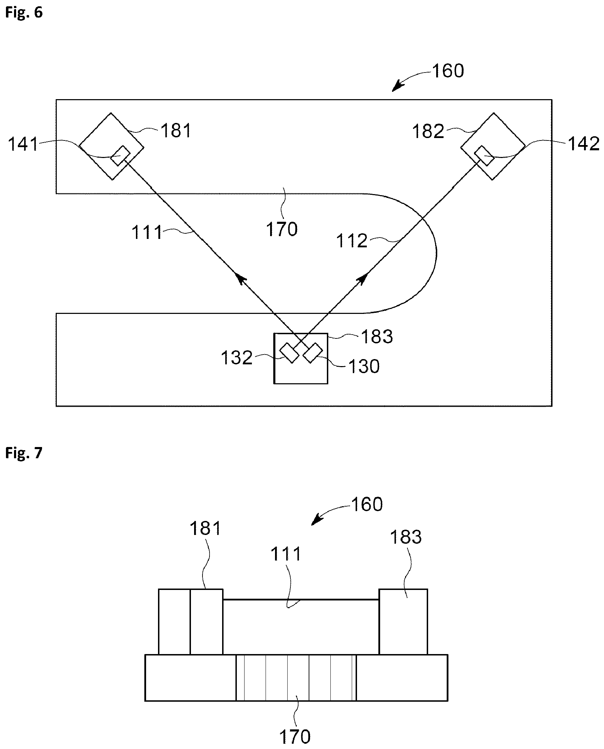

Fig. 6 shows an embodiment 160 with towers in a top view. A body 170 supports at least one tower 181, 182, 183. The at least one tower holds at least one of a light source 130, 132 and a light detector 141, 142. In this specific embodiment three tower shaped protrusions are shown. A first tower 181 holds a first light detector 141, a second tower 182 holds a second light detector 143, and a third tower 183 holds light sources 130, 132. The third tower 183 may also hold a light source and a mirror. Due to the tower, the light beams 111, 112 are above the body 170, such that a tool can pass though the light beams without limitation by the body.

Fig. 7 shows an embodiment 160 with towers in a side view. The light beam 111 is above the body 170 to provide clearance for a tool passing through the light beams.

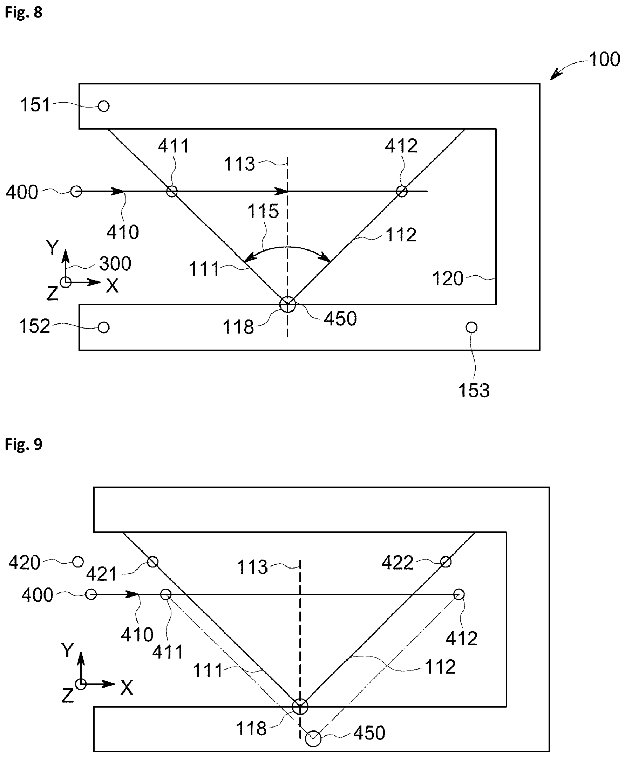

Fig. 8 shows the movement of a tool tip 400. A tool tip 400, which is part of a tool, is moved such, that it crosses the first light beam 111 and the second light beam 112 in any order. The direction of movement may be orthogonal to a center axis 113 between the light beams. For easier reference, this may be parallel to a side of the body 120. In this example, the tool tip 400 moves towards the first light beam 111 until it crosses the first light beam 111 at crossing point 411.

The tool tip 400 may continue movement in the same direction, such that it crosses the center axis of the light beams 113 under a right angle and proceeds towards the second light beam 112 until it crosses the second light beam 112 at a second crossing point 412. The movement of the tool tip 400 may be terminated or it may be continued, for example to leave the space of the tool 100.

When the tool tip 400 has reached either the first crossing point 411 or the second crossing point 412, a corresponding light detector 141, 142 may signal this event, as the light beam is interrupted, and the light detector does not receive any light. At the crossing points 411, 412, the positions of the tool tip are stored and used for calculating a circle intersection point 450. The offset between the circle intersection point 450 and the intersection point of the light beams 118 indicates the displacement of the tool tip.

An example of such a calculation is given by referencing to a coordinate system 300. The coordinate system has an x-axis which is from the left to the right in the drawing plane, a y-axis from the bottom to the top in the drawing plane. And a z-axis coming out of the drawing plane. If the angle between the light beams 115 is 90°, the calculation is very simple. As the movement is parallel to the x-axis, the x-position of the circle intersection point is the x-value of the center between the first crossing point 411 and the second crossing point 412. Further, in this embodiment, the circle intersection point 450 is offset in a negative y-direction to the movement path 410 of the half distance between the second crossing point 412 and the first crossing point 411. In this embodiment, the tool tip is not displaced to the path of movement and therefore the circle intersection point 450 is the same as the reference intersection point of light beams 118.

Another type of movement and calculations which may be applied to this embodiment, are shown in the figure 9 below.

Fig. 9 shows an example with an offset tool tip. In this embodiment, the tool tip may have an offset. This means, that while the device holding the tool tip like a robot, or a manufacturing machine positions the tool tip to a tool tip position 400. The real tool tip due to any deformation or bending is offset to position 400 at position 420. When a movement along the path of movement 410 is performed, the offset position of the tool tip will do the same, but with its offset. Therefore, when the first light beam 111 is crossed, this is done with the tool tip at the first offset crossing position 421. Here, the position indicated by the positioning device is position 411. When movement is continued, there is a further crossing of the second light beam 112 at second offset crossing position 422. Here, the positioning device has moved to position 412 to which the second crossing point is indicated. The offset always remains constant. Calculating the circle intersection point 450 as described before results in a circle intersection point 450 which is offset from the real and known reference intersection point of light beams 118. Based on this, the unknown position of the tool tip can be calculated by adding the difference between the x- and y-coordinates of the reference intersection point of light beams 118 and of the circle intersection point 450 to the tool tip position of the control device.

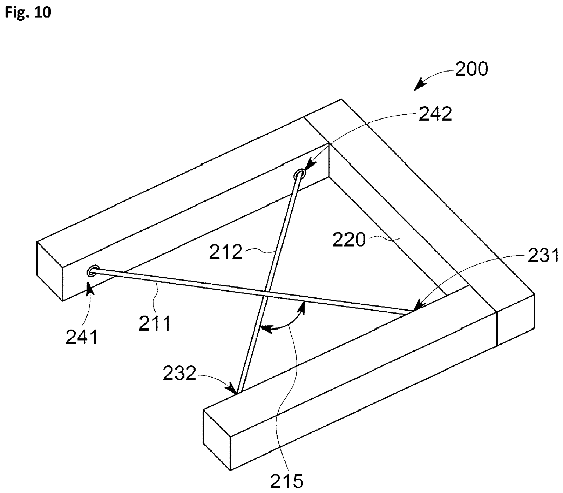

Fig. 10 shows an embodiment 200 as disclosed in US 7,684,898 B2. In this embodiment, there is a first light beam 211 and a second light beam 212 which are crossing each other under an angle 215. There may be a first light source 231 for generating the first light beam 211 and a first light detector 241 for detecting the first light beam 211. There may further be a second light source 232 for generating the second light beam 212 and a second light detector 242 for detecting the second light beam 212. The light sources and the light detectors may be held within a body 220.

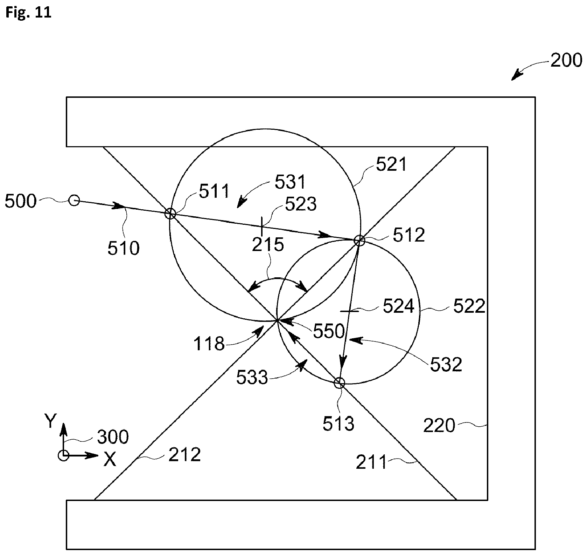

Fig. 11 shows a movement of a tool tip in the embodiment shown in the previous figure. The movement of the tool tip may start at position 500 and moves in a direction such that it may later cross the light beams in any order with a straight movement along a first path section 531. The exact direction of the path is not critical. Basically, any path which crosse both light beams may be acceptable. Here, the movement must not be parallel to any orientation of the tool. At first crossing point 511, the first light beam 211 is crossed. When the movement continues, later, at second crossing point 512, the second light beam 212 is crossed. At the crossing point, the direction of movement is changed, such that on a straight second path section 532 the first light beam, in this case light beam 211, is crossed again. Such a crossing may occur at third crossing point 513.

A circle intersection point is defined by the intersecting point between first circle 521 and a second circle 522. The first circle 521 has a center point 523 which is in center on the first path section 531 between the first crossing point 511 and the second crossing point 512. The circle has a diameter equal to the distance between the first crossing point 511 and the second crossing point 512. The second circle 522 has a center point 524 which is in center on the second path section 532 between the third crossing point 513 and the second crossing point 512. The diameter of the second circle 522 is the distance between the third crossing point 513 and the second crossing point 512.

Both circles intersect at two points. A first intersection point is the second crossing point 512. A second crossing point is the circle intersection point 550. Therefore, the circle intersection point 550 can easily be identified. If by chance the second path section 532 ends at the circle intersection point 550, there is only one intersection point between the circles.

After reaching the third crossing point 513, in a third path section 533, the tool tip may be moved to either a circle intersection point 550 or to the reference intersection point 118.

For further improvement of accuracy, the tool tip may be moved to the intersection point 550 to verify, whether the first light beam 211 and the second light beam 212 are interrupted at the same time. If only one light beam or no light beam is interrupted, the same procedure may be repeated again. In an alternative embodiment, a search pattern, which may be a spiral pattern, may be made to locate the center point.

Calculation of the intersection point 550 is comparatively simple. It is even more simple, if there is a 90° angle between the first path section 531 and the second path section 532. Further, with a 90 ° angle, the calculation error is minimized.

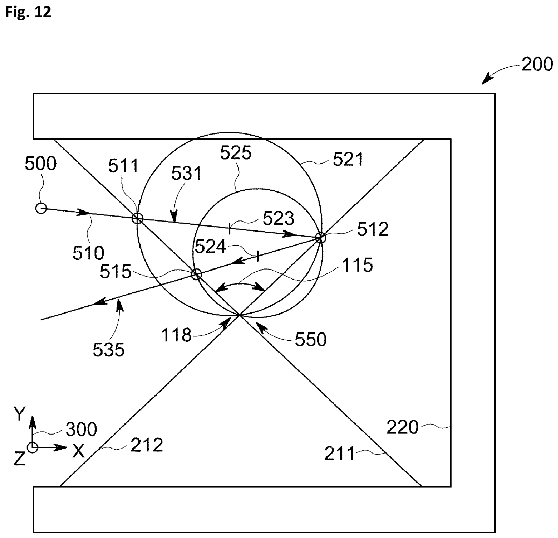

Figure 12 shows an alternate movement of the tool tip. Here, the tool tip moved on an alternate second path section 535 which may be essentially in a direction opposite to the first path section 531. The total movement of the tool tip may have a V-shape into and out of the tool center point calibration device 100. On the alternate second path section 535, the first light beam 211 is crossed at alternate third crossing point 515. An alternate second circle 525 is defined by an alternate second circle center point 526 in center between the second crossing point 512 and the alternate third crossing point 515 together with a diameter corresponding to the distance between the second crossing point 512 and the alternate third crossing point 515. This alternate second circle 525 also intersects the first circle 521 at second crossing point 512 and at the circle intersection point 550. By that way the circle intersection point 550 can easily be calculated.

This movement and the calculations of the circle intersection point 550 may also be applied to the first embodiment, as disclosed in figures 1 to 6.

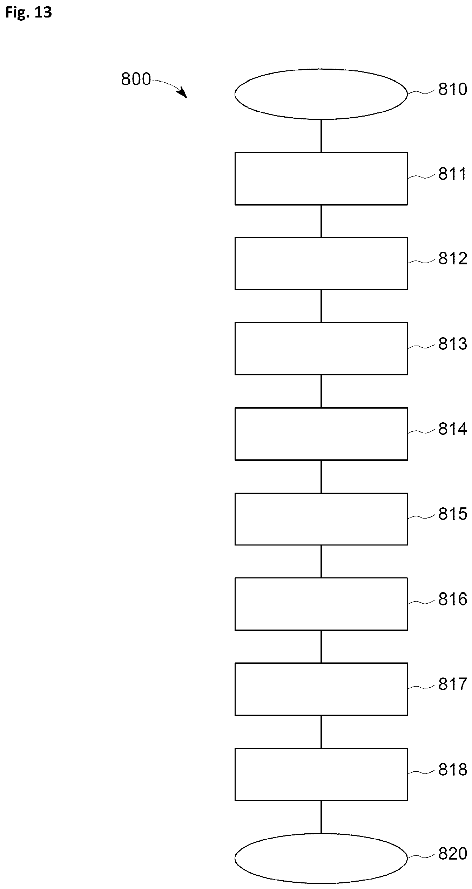

Fig. 13 shows a flow-chart of a method of calibrating a tool tip. The method 800 starts at 810 and ends at 820. The method may be repeated multiple times. In a first step, a tool tip is moved along a straight line of a first path section 531 such that it crosses both light beams consecutively. In step 812, at first crossing point 511, the position of the crossing point 511 is stored, when the first light beam 211 is interrupted. In step 813, at second crossing point 512, the position of the crossing point 512 is stored, when the second light beam 212 is interrupted. In step 814, the direction of movement is changed to a second path section 532 such that the first light beam 211 is crossed again. The direction change may be an angle close to a right angle, e.g., a right angle or it may be an acute angle. In step 815, at third crossing point 513, the position of the crossing point 513 is stored, when the first light beam 211 is interrupted. In step 816, a circle intersection point 550 is calculated from the stored values of the first crossing point 511, the second crossing point 512 and the third crossing point 513. In step 817, the difference between the circle intersection point 550 and the reference intersection point 118 may be calculated to determine the offset of the tool tip. In an optional step 818, a movement may be performed at a third path section 532 towards the circle intersection point 550.

Herein, the method is described at an example of a continuous path starting at a tool tip start position 500 and ending at third crossing point 513 or circle intersection point 550. In an alternating embodiment, the paths may be performed as independent paths. For example, there may be a first path section crossing the first light beam and the second light beam. Then, there may be a second path section, different from the first path section, crossing the second light beam and the first light beam. This second path section may be completely independent of the first path section such that it must not originate from a second crossing point 512, but it may originate from a different point 512'. The same applies to the third path section.

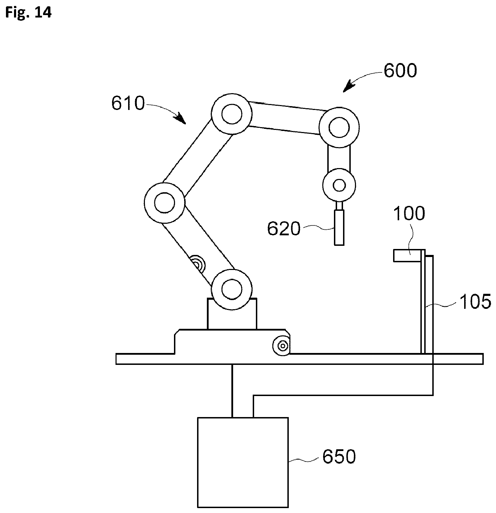

In figure 14, a tool handling system 600 is shown. An industrial robot 610 may hold a tool 620. Instead of the industrial robot 610, there may be any other suitable device, e.g., a machine tool for handling the tool 620. A tool center point calibration device 100 may be held by a stand 105 within the operating range of the industrial robot 610. A controller 650 may be provided to control movement of the industrial robot 610 and to communicate with the tool center point calibration device 100. The controller may perform the calibration calculations based on signals from the tool center point calibration device 100 and position information of the industrial robot 610.

### List of reference numerals

- 100: tool center point calibration device
- 101: tool center point calibration device with two light sources
- 105: stand
- 111: first light beam
- 112: second light beam
- 113: center axis of light beams
- 115: angle between light beams
- 118: reference intersection point
- 120: body
- 130: light source
- 131: semi-transparent mirror
- 132: second light source
- 141: first light detector
- 142: second light detector
- 151-153: coordinate reference markers
- 160: further embodiment of tool center point calibration device
- 170: body
- 181: first tower with first light detector
- 182: second tower with second light detector
- 183: third tower with light sources
- 200: second embodiment of tool center point calibration device
- 211: first light beam
- 212: second light beam
- 215: angle between light beams
- 220: second body
- 231: first light source
- 232: second light source
- 241: first light detector
- 242: second light detector
- 220: body
- 300: coordinate system
- 400: first tool tip position
- 410: path of movement
- 411: first crossing point
- 412: second crossing point
- 420: offset tooltip
- 421: first offset crossing position
- 422: second offset crossing position
- 450: virtual intersection point
- 500: tool tip start position
- 510: path of movement
- 511: first crossing point
- 512: second crossing point
- 513: third crossing point
- 515: alternate third crossing point
- 521: first circle
- 522: second circle
- 523: first circle center point
- 524: second circle center point
- 525: alternate second circle
- 526: alternate second circle center point
- 531: first path section
- 532: second path section
- 533: third path section
- 535: alternate second path section
- 550: virtual intersection point
- 600: tool handling system
- 610: industrial robot
- 620: tool
- 650: controller
- 800: method of calibration
- 810: method start
- 811-817: method steps
- 820: method end

## Claims

1. A method of tool center point calibration including the steps of:
a) providing a first light beam (111, 211) and a second light beam (112, 212) under an angle (215) to the first light beam (111, 211) and
a first light detector (241) at the first light beam (111, 211) being configured to generate a first signal, when the first light beam (111, 211) is interrupted,
a second light detector (242) at the second light beam (112, 212) being configured to generate a second signal, when the second light beam (112, 212) is interrupted, and
the axes of the first light beam (111, 211) and of the second light beam (112, 212) have a reference intersection point (118),
b) starting movement of a tool (620) along a straight first path section (531),
c) receiving a first signal when the tool (620) crosses the first light beam (111, 211) at a first crossing point (511) and storing the coordinates of the first crossing point (511),
d) receiving a second signal when the tool (620) crosses the second light beam (112, 212) at a second crossing point (512) and storing the coordinates of the second crossing point (512),
e) changing direction of movement of the tool (620) along a straight second path section (532)
f) receiving a first signal when the tool (620) crosses the first light beam (111, 211) at a third crossing point (513) and storing the coordinates of the third crossing point (513),
g) calculating the coordinates of a virtual intersection point (550) based on the coordinates of the first crossing point (511), the second crossing point (512), and the third crossing point (513).

2. The method according to claim 1,
**characterized in, that**
the angle (215) between the first light beam (111, 211) and the second light beam (112, 212) is 90°.

3. The method according to any of the previous claims,
**characterized in, that**
the first light beam (111, 211) and the second light beam (112, 212) are laser beams.

4. The method according to any of the previous claims,
**characterized in, that**
in step e) changing the direction of movement of the tool (620) about an angle in one of the ranges of [+60°; +120°], [-60°; -120°], [+150°; +179°], [-150°; -179°].

5. The method according to any of the previous claims,
**characterized in, that**
in step g) performing the sub steps of:
g1) determining a first circle (521) having a center point in center between the first crossing point (511) and the second crossing point (512), and a diameter corresponding to the distance between the first crossing point (511) and the second crossing point (512),
g2) determining a second circle (522) having a center point in center between the second crossing point (512) and the third crossing point (513), and a diameter corresponding to the distance between the second crossing point (512) and the third crossing point (513),
g3) calculating the coordinates of the virtual intersection point (550) as an intersection of the first circle (521) and the second circle (522) the virtual intersection point (550) being distant from the second crossing point (512).

6. The method according to any of the previous claims,
**characterized in, that**
after step g) the following step are performed:
h) calculating the displacement of the tool (620) by subtracting the coordinates of the virtual intersection point (550) from the coordinates of a reference intersection point of the axes of the light beams (118).

7. The method according to the previous claim,
**characterized in, that**
before step h) the following step is performed:
calibrating the reference intersection point (118) by means of coordinate reference markers, which may be in a defined spatial relationship with the reference intersection point (118).

8. The method according to any of the previous claims,
**characterized in, that**
in steps c), d) and f) storing the coordinates in a memory of a controller (850) and performing the calculations of step g) by a controller.

9. A tool center point calibration device (100) comprising:
at least one light source (130, 132) configured to provide a first light beam (111) and a second light beam (112) under an angle (115) to the first light beam (111), the axes of the first light beam (111) and of the second light beam (112) having a reference intersection point (118),
a first light detector (141) at the first light beam (111) being configured to generate a first signal, when the first light beam (111) is interrupted, and a second light detector (142) at the second light beam (112) being configured to generate a second signal, when the second light beam (112) is interrupted, **characterized in, that**
the first light beam (111) does not intersect the second light beam (112).

10. The tool center point calibration device (100) according to claim 9,
**characterized in, that**
the angle (115) between the first light beam (111) and the second light beam (112) is 90°.

11. The tool center point calibration device (100) according to claim 9 or 10,
**characterized in, that**
the first light beam (111) and the second light beam (112) are laser beams.

12. The method or the tool center point calibration device (100) according to any of the previous claims,
**characterized in, that**
the reference intersection point (118) is
an intersection point where the axis of the light beams intersect or
the reference intersection point (118) is a point where the first light beam (111) and the second light beam (112) intersect.

13. The tool center point calibration device (100) according to any of claims 9 to 12,
**characterized in, that**
the at least one light source (130, 132) includes a single light source (130) and a semi-transparent mirror (131) configured to split a light beam of the single light source (130) into the first light beam (111) and the second light beam (112) or
the at least one light source (130, 132) includes a first light source (130) configured to generate the first light beam (111) and a second light source (132) configured to generate the second light beam (112).

14. The tool center point calibration device (100) according to any of claims 9 to 13,
**characterized in, that**
the at least one light source (130, 132), the first light detector (141), and second light detector (142) are held by protrusions above a body (120) of the tool center point calibration device (100).

15. The tool center point calibration device (100) according to any of claims 9 to 14,
**characterized in, that**
the tool center point calibration device (100) includes at least one coordinate reference marker (151, 152, 153) being in a defined spatial relationship to the reference intersection point (118).
